# EUROPÄISCHE PATENTSCHRIFT

(11) **EP 0 561 824 B1**
(45) Veröffentlichungstag und Bekanntmachung des Hinweises auf die Patenterteilung: **07.09.1994**
(21) Anmeldenummer: 91920505.4
(22) Anmeldetag: 26.11.1991
(51) Int. Cl.: B62D 29/00, B60S 11/00, B62D 25/20

(54) **HALTERUNG AN EINER FAHRZEUGKAROSSERIE, INSBESONDERE ALS GEHÄNGEAUFNAHME**
HOLDER ON VEHICLE BODYWORK, ESPECIALLY AS A SUSPENSION SEATING
FIXATION SUR UNE CARROSSERIE DE VEHICULE, SERVANT NOTAMMENT A RECEVOIR UN APPAREIL DE SUSPENSION

(30) Priorität: 20.12.1990 DE 4040976
(43) Veröffentlichungstag der Anmeldung: 29.09.1993
(73) Patentinhaber: AUDI AG, 85002 Ingolstadt (DE)
(72) Erfinder: ENNING, Norbert, D-8071 Denkendorf (DE); RINKE, Klaus, Peter, D-8071 Wettstetten (DE); SCHMALE, Walter, D-8071 Lenting (DE); TIMM, Heinrich, D-8070 Ingolstadt (DE)
(74) Vertreter: Engelhardt, Harald
(86) Internationale Anmeldenummer: EP9102234
(87) Internationale Veröffentlichungsnummer: WO9211171

(56) Entgegenhaltungen:
- US-A- 2 628 812
- PATENT ABSTRACTS OF JAPAN vol. 9, No. 87 (M-372) 17 April 1985 & JP-A-59 215 231 (HISANOBU YOSHIGAI) 5 December 1984
- PATENT ABSTRACTS OF JAPAN vol. 7, 120 (M-217) 25 May 1983 & JP-A-58 039 521 (NISSAN) 8 March 1983

## Beschreibung

Die Erfindung betrifft eine Halterung an einer Fahrzeugkarosserie, insbesondere als Gehängeaufnahme, nach dem Oberbegriff des Anspruchs 1.

An Fahrzeugkarosserien sind üblicherweise mehrere Halterungen als Aufhänge- und Abstützpunkte angebracht. Als Beispiele werden Abstützlaschen für die Befestigung auf einer Richtbank, Karosserieöffnungen oder Schienen zum Ansetzen eines Wagenhebers und Vorsprünge oder Öffnungen zum Verzurren eines Fahrzeugs beim Transport genannt. Weiter werden für die Serienfertigung von Fahrzeugkarosserien sog. Gehängeaufnahmen erforderlich, an denen eine Karosserie mit den Transportgestellen für eine Fließbandfertigung verbunden werden.

Es ist bekannt, solche Abstütz- und Aufnahmepunkte zur Schaffung von Befestigungsansätzen und Befestigungsöffnungen sowie zur Verstärkung und Aussteifung des umgebenden Bereichs aus mehreren Blechteilen herzustellen und diese durch Schweißen zu verbinden. Solche Blechlösungen nach dem Stand der Technik sind wegen der meist komplizierten Blechteilstruktur, der Teilevielfalt und des aufwendigen Zusammenbaus relativ teuer. Dabei ist zu beachten, daß pro Karosserie üblicherweise jeweils vier solche Aufhänge- oder Abstützpunkte der o. g. Art erforderlich sind, die zudem je nach Anbringungsort und Fahrzeugseite noch unterschiedlich ausgeführt sein können, so daß sich die hohen Kosten pro Teil vervierfachen.

Aufgabe der Erfindung ist es, entsprechende Halterungen an Fahrzeugkarosserien einfacher und preisgünstiger zu gestalten.

Diese Aufgabe wird mit den Merkmalen des Anspruchs 1 gelöst.

Gemäß Anspruch 1 wird vorgeschlagen, als Halterung ein kurzes Stück eines Strangprofils, bevorzugt eines Aluminium-Strangprofils, zu verwenden. Damit können Halterungen einfach und preiswert dadurch hergestellt werden, daß sie von einem langen Strangprofilträger abgeschnitten werden. Durch eine entsprechende geometrische Ausformung des Profilquerschnitts und des Beschnitts können die erforderliche Festigkeit und Belastbarkeit der Halterung einfach dimensioniert und zudem auf gleiche Halterungen für einen linksseitigen und rechtsseitigen Einbau zurückgegriffen werden.

Gegenüber einer Blechlösung ergibt sich somit eine Bauteilvereinfachung und eine Teilereduzierung sowie eine Vereinfachung des Zusammenbaus, was insgesamt zu einer Kostenersparnis führt. Bei der Verwendung eines Aluminium-Strangprofils wird zudem ein verbesserter Korrosionsschutz erhalten.

Vorteilhaft werden solche Halterungen in Form von Strangprofilstücken in an sich bekannter Weise nach Anspruch 2 im Abstand an Längsträgern des Fahrzeugs angeschweißt. Es sind jedoch auch andere Verbindungstechniken, wie beispielsweise Klebeverbindungen, möglich.

Besonders vorteilhaft sind Halterungen aus Aluminium-Strangprofilstücken nach Anspruch 3 in Verbindung mit Aluminiumkarosserien verwendbar, wo die Längsträger ebenfalls aus Aluminium-Strangprofilen bestehen.

In einer konkreten Ausführungsform nach Anspruch 4 ist das Strangprofil der Strangprofilstücke im Querschnitt L-förmig als Zweikammer-Strangprofil ausgebildet. Dabei steht eine erste, kastenförmige Profilkammer als erster L-Schenkel etwa senkrecht als Tragarmbereich vom Bodenbereich bzw. dem Längsträger nach unten ab. Eine zweite, etwa waagrecht liegende, kastenförmige Profilkammer bildet als zweiter L-Schenkel den eigentlichen Aufnahmebereich. Eine Ausführung mit einem solchen Profilquerschnitt ist einfach hinsichtlich der Festigkeit und der geometrischen Anforderungen zu dimensionieren.

Mit dem in Anspruch 5 beanspruchten Steg zwischen der ersten und zweiten Profilkammer im Bereich der L-Winkel-Kante wird die Halterung in Belastungsrichtung ausgesteift.

Die Halterung wird nach Anspruch 6 zweckmäßig so angebracht, daß sie mit ihrer Strangprofilrichtung in Richtung des Längsträgers verläuft, wobei die zweite Profilkammer in Richtung zur Fahrzeugmitte weist. Die beiden Profilkammern sind dabei in Fahrzeuglängsrichtung gesehen durchgehend offen.

Als Ansatz oder Aufnahme für Halterungen an Wagenhebern, Verzurrungseinrichtungen, Richtbänken oder Transportgestellen wird mit Anspruch 7 vorgeschlagen, an der Unterseite in die zweite Profilkammer eine Ausnehmung einzubringen.

Bevorzugt wird die beschriebene Halterung als Gehängeaufnahme verwendet. Sie kann jedoch auch für die vorstehend genannten anderen Abstützungen und Haltemaßnahmen verwendet werden.

Anhand eines Ausführungsbeispiels wird die Erfindung mit weiteren Merkmalen, Einzelheiten und Vorteilen näher erläutert.

Es zeigen
- Fig. 1: eine perspektivische Ansicht eines Längsträgers mit einer erfindungsgemäßen Halterung,
- Fig. 2: einen Querschnitt durch eine erfindungsgemäße Halterung.

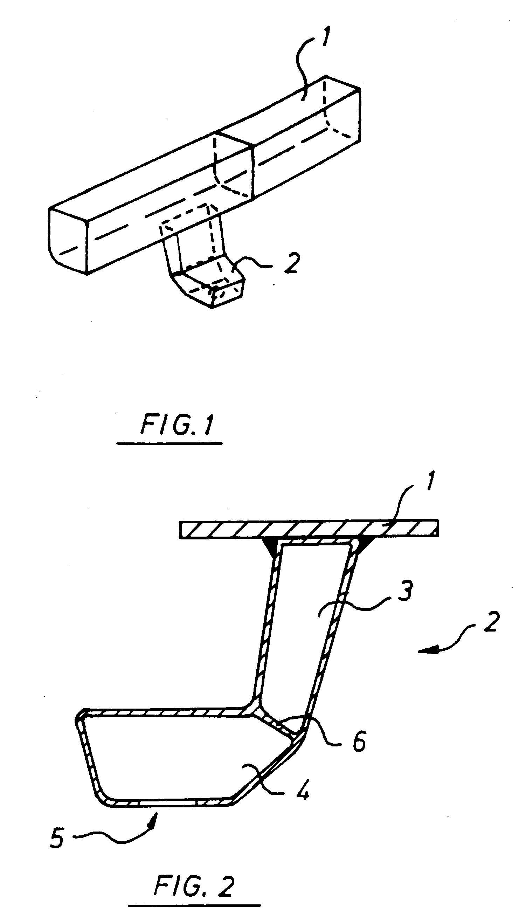

In Fig. 1 ist ein Teil eines Längsträgers eines Kraftfahrzeugs als Aluminium-Strangprofil dargestellt, an dessen Unterseite eine erfindungsgemäße Halterung 2 angeschweißt ist.

Solche Halterungen 2 sind zu beiden Seiten des Fahrzeugs im vorderen und hinteren Bereich als Gehängeaufnahmen angebracht, wo für eine Fließbandfertigung die Karossen mit den Transportgestellen verbunden sind. Die Halterungen 2 können aber auch für andere Zwecke verwendet werden, beispielsweise als Wagenheberabstützungen, Richtbankflansche, etc.

Mit Bezug auf Fig. 2 wird die Halterung 2 mit weiteren Einzelheiten erläutert. Diese besteht aus jeweils einem kurzen Stück eines Aluminium-Zweikammer-Strangprofils, das im Querschnitt L-förmig ausgebildet ist. Eine erste, kastenförmige bzw. rechteckige Profilkammer 3 steht etwa senkrecht und bildet einen Tragarmbereich, der mit seiner Oberseite mit dem Träger 1 verschweißt ist. Damit steht dieser Tragarmbereich etwa senkrecht, leicht zur Fahrzeuginnenseite geneigt, unter dem Längsträger 1 ab.

Eine zweite, kastenförmige Profilkammer 4 schließt sich an die erste Profilkammer 3 etwa waagrecht an und bildet den eigentlichen Aufnahmebereich, wozu von unten her eine Bohrung 5 in die Profilkammer 4 eingebracht ist.

Zwischen der ersten Profilkammer 3 und der zweiten Profilkammer 4 liegt ein Steg 6, der im Bereich der L-Winkel-Kante verläuft und das Profil in Belastungsrichtung versteift.

Damit ist mit einfachen Mitteln eine gut belastbare Gehängeaufnahme geschaffen, die den jeweiligen Gegebenheiten an einem Fahrzeug durch entsprechende Dimensionierung des Profils und des Beschnitts angepaßt werden kann.

## Patentansprüche

1. Halterung an einer Fahrzeugkarosserie, insbesondere als Gehängeaufnahme,
die im Bodenbereich mit der Karosserie verbunden ist,
dadurch gekennzeichnet,
daß die Halterung (2) ein kurzes Stück eines Strangprofils, bevorzugt eines Aluminium-Strangprofils, ist.

2. Halterung nach Anspruch 1, dadurch gekennzeichnet, daß die Halterung (2) an einem Längsträger (1) der Fahrzeugkarosserie angeschweißt ist.

3. Halterung nach Anspruch 2 dadurch gekennzeichnet, daß der Längsträger (1) ebenfalls ein Strangprofil, bevorzugt ein Aluminium-Strangprofil, ist.

4. Halterung nach einem der Ansprüche 1 bis 3, dadurch gekennzeichnet,
daß die Halterung (2) im Querschnitt gesehen L-förmig als Zweikammer-Strangprofil ausgebildet ist, mit einer ersten, etwa senkrecht stehenden, kastenförmigen Profilkammer (3) als erstem L-Schenkel, die mit ihrer Oberseite mit dem Bodenbereich bzw. dem Längsträger (1) verbunden ist und einen Tragarmbereich bildet, und
mit einer zweiten, etwa waagrecht liegenden, kastenförmigen Profilkammer (5) als zweiten L-Schenkel, die sich an die erste Profilkammer (3) anschließt und die einen Aufnahmebereich bildet.

5. Halterung nach Anspruch 4, dadurch gekennzeichnet, daß die erste und zweite Profilkammer (3, 4) durch einen Steg (6) im Profil, der in der L-Winkel-Kante verläuft, getrennt sind.

6. Halterung nach Anspruch 4 oder 5, dadurch gekennzeichnet, daß die Halterung (2) mit einer oberen, etwa waagrechten Wand der ersten Profilkammer (3) mit dem Längsträger (1) so verbunden ist, daß die Profilrichtung des Strangprofilteils in Richtung des Längsträgers (1) verläuft und die zweite Profilkammer (4) in Richtung zur Fahrzeugmitte weist.

7. Halterung nach einem der Ansprüche 4 bis 6, dadurch gekennzeichnet, daß an der Unterseite der Halterung (2) eine Ausnehmung in die zweite Profilkammer (4) angebracht ist.

## Claims

1. Bracket on a vehicle bodyshell, more particularly to act as a locator for suspending the bodyshell, and joined to the floor region of the bodyshell,
characterised in that the bracket (2) is a short piece of extruded profile, preferably of extruded aluminium profile.

2. Bracket according to claim 1, characterised in that the bracket (2) is welded to a side-member (1) of the vehicle bodyshell.

3. Bracket according to claim 2, characterised in that the side-member (1) is likewise an extruded profile, preferably an extruded aluminium profile.

4. Bracket according to any of claims 1 to 3, characterised in that
the bracket (2), viewed in cross-section, is an L-shaped twin-compartment extruded profile, comprising a first, more or less vertically upright, box-shaped profile compartment (3) as the first leg of the L and joined by its upper face to the floor region, or side-member (1), and which forms a supporting arm region, and
having a second, more or less horizontal, box-shaped profile compartment (4) as the second leg of the L, which adjoins the first profile compartment (3) and forms a locating region.

5. Bracket according to claim 4, characterised in that the first and second profile compartments (3, 4) are separated by a web (6) in the profile, extending across the corner of the L.

6. Bracket according to claim 4 or 5, characterised in that the bracket (2) is joined to the side-member (1) by an upper, more or less horizontal wall of the first profile compartment (3), in such a manner that the profiling of the extruded profile part runs in the direction of the side-member (1) and the second profile compartment (4) is facing towards the middle of the vehicle.

7. Bracket according to any of claims 4 to 6, characterised in that on the lowerside of the bracket (2) the second profile compartment (4) incorporates a recess.

## Revendications

1. Patte de fixation à la carrosserie d'un véhicule automobile, destinée en particulier à servir de siège de suspension et fixée à la carrosserie dans la région du plancher,
caractérisée en ce que la patte de fixation (2) est un court morceau d'un profilé filé, de préférence d'un profilé filé en aluminium.

2. Patte de fixation selon la revendication 1, caractérisée en ce que la patte de fixation (2) est soudée sur un longeron (1) de la carrosserie du véhicule.

3. Patte de fixation selon la revendication 2, caractérisée en ce que le longeron (1) est également un profilé filé, de préférence un profilé filé en aluminium.

4. Patte de fixation selon l'une quelconque des revendications 1 à 3, caractérisée en ce que la patte de fixation (2), en forme de L vue en coupe transversale, est réalisée sous la forme d'un profilé filé à deux chambres, qui comporte, en tant que première branche du L, une première chambre (3) en forme de caisson, disposée à peu près verticalement, qui est fixée par son côté supérieur à la région du plancher ou au longeron (1) et qui constitue une partie bras porteur, et
en tant que seconde branche du L, une seconde chambre (5) en forme de caisson, disposée à peu prés horizontalement, qui se raccorde à la première chambre (3) et qui constitue une partie siège.

5. Patte de fixation selon la revendication 4, caractérisée en ce que les première et seconde chambres (3, 4) sont séparées par une cloison (6) qui s'étend dans le profilé au niveau de l'angle du L.

6. Patte de fixation selon la revendication 4 ou 5, caractérisée en ce que la patte de fixation (2) est fixée au longeron (1) par une paroi supérieure, à peu près horizontale, de la première chambre (3), de sorte que la direction du morceau de profilé filé corresponde à la direction du longeron (1) et que la seconde chambre (4) soit dirigée vers le milieu du véhicule.

7. Patte de fixation selon l'une quelconque des revendications 4 à 6, caractérisée en ce qu'un trou est formé dans la seconde chambre (4) du côté inférieur de la patte de fixation (2).
